# EUROPEAN PATENT APPLICATION

(11) **EP 2 816 518 A2**
(43) Date of publication of application: **24.12.2014**
(21) Application number: 14172935.0
(22) Date of filing: 18.06.2014
(51) Int. Cl.: G06Q 30/02

(54) **Methods and apparatuses to identify user dissatisfaction from early cancelation**

(30) Priority: 20.06.2013 US 201313922864
(71) Applicant: Telefonaktiebolaget L M Ericsson (Publ), 164 83 Stockholm (SE)
(72) Inventor: Arvidsson, Ake, 169 40 Solna (SE); Zhang, Ying, Fremont, CA California 94555 (US)
(74) Representative: Hoffmann Eitle

(57) **Abstract**

In the present disclosure methods and apparatuses for identifying web page transactions causing user dissatisfaction is presented. The description disclose method steps and means for determining at least one network characteristic for all transactions associated with a web page and said user, determining a network characteristics function dependent on said at least one network characteristic using the transactions not associated with cancellations and for each cancelled transaction determining a value indicative of if said cancelled transaction was a result of user dissatisfaction by comparing said at least one network characteristic for said cancelled transaction with a value derived from said network characteristics function.

## Description

### TECHNICAL FIELD

The present invention generally relates to communication systems, and more particularly to identifying user satisfaction or dissatisfaction of web services.

### BACKGROUND

With the decreasing cost of content delivery and the growing success of network access technologies, the usage of web applications has been increasing tremendously in the past and the increase is predicted to continue in the years to come. The rise is more phenomenal in the cellular networks, thanks to the emergence of user-friendly smartphones and the advances in cellular data network technologies. An imminent challenge that the network operators face is the lack of accurate methods to measure the Quality-of-Experience (QoE) for general web applications. QoE is application-dependent and is a subjective metric, which is related to user expectation, satisfaction, and overall experience. Factors affecting QoE include the content, the application, the terminal, the cost and the performance. Thus, QoE is harder to quantify or objectively measure.

Developing the right set of tools to map QoS metrics to QoE is challenging. On the one hand, the requirements of many network applications go beyond the traditional single requirement of high throughput to a combination of good network performance, high media quality, fast interactivity, and prompt responsiveness. On the other hand, QoS guarantee in today's networks is not an end-to-end concept, and is only applied to parts of the path between two end hosts. Therefore, QoS measurements in individual nodes or sub-networks may indicate acceptable performance, but end users may still be experiencing unacceptable performance.

A recent study by the present inventors proposes to infer user dissatisfaction from the behavior of early abortion of web transactions and is disclosed in US 13/401645 filed February 21, 2012 and titled Quantifying user Quality of Experience by Passive Monitoring, hereby incorporated by reference. More specifically, unsatisfactorily long time from the request for a page to the presentation of that page on the screen could make impatient end-users push the STOP or RELOAD buttons in their web browsers thereby initiating user-end cancelations. Such cancelations would result in early closures of the HTTP sessions as well as the underlying TCP connections and may be interpreted as indicators of unsatisfactory QoE. We call them user initiated early termination/cancelation/abortion. These behaviors can be inferred by analyzing the transport layer actions passively.

Today's ever-growing, wide-range of network applications shift the performance requirements of the network for satisfying users' needs and expectations; from high throughput to high media quality, fast interactivity, and prompt responsiveness. Therefore, from end users' perspectives, Quality of Service (QoS) is not the right way to capture the network performance.

While operators today have ways to support differentiated QoS, automated methods to translate QoS to QoE for general applications are still missing, in particular beyond a few audio and video applications. The challenge for a service provider is to have the right set of tools and processes to map QoS at the network level to QoE at the user level and have the ability to control it. This is mainly because of two reasons.

First, the requirements of many network applications go beyond the traditional single requirement of high throughput and include high media quality, fast interactivity, and prompt responsiveness. These requirements are not directly captured by typical QoS metrics. For example, the QoE requirements of Voice over IP (VoIP) conversations may include dimensions like sound fidelity, voice loudness, noise levels, echo levels, and conversational delay; and the QoE requirements of on-line gaming could include dimensions like interactivity, responsiveness, and consistency.

Second, QoS guarantee in today's networks is not an end-to-end concept, and is only applied to parts of the path between two end hosts. In other words, there is no coordination between all packet-processing boxes connecting a client to a server. Therefore, QoS measurements in individual nodes or sub-networks may indicate acceptable performance, but end users may still be experiencing unacceptable performance. A VoIP subscriber, *e.g*., may experience service interruptions because of packet drops by a single switch at the edge of the network -- even though all other routers/switches implement the required QoS prioritization. Another challenge in QoS to QoE translation is the coarse aggregation-level at which QoS classification is typically applied.Hard QoS guarantees are very costly in terms of resource consumption, and thus in terms of tariffs, hence QoS guarantees are typically statistical which by nature means that some flows will experience worse performance.

Methods for assessing the quality of network applications can be classified as either subjective or objective. Subjective methods require users' input in the evaluation process. Objective methods do not require such input, but they are often based on well-validated data derived from subjective evaluations.

The traditional approach to QoE measurement is subjective quality evaluations in which users indicate their feelings in a survey. Different recommendations standardize the most used subjective methods in audio and video. One such method is to assess the image quality perceived by an end user in an automatic way without time-consuming subjective tests. A number of studies have sought to evaluate the effect of network quality on online gamers. In most of them, a series of games is played in a controlled network environment in which the gaming experience of the subjects is graded.

Objective evaluations rely on monitoring the behaviour of an application and/or a user by using measurements on the network-level or on the media-level as input for quality assessments. We group the related work on objective measurement into the active measurement based and passive measurement based categories.

Active measurements mean the injection of extra data to perform the measurement, such as audio and/or video sequences. Examples of audio assessment models include the perceptual speech quality measure (PSQM) and its successor perceptual evaluation of speech quality (PESQ), the measuring normalizing blocks (MNB), and the modified bark spectral distortion (MBSD) and the enhanced version (EMBSD. In the case of video, some of the developed tools are the Structural Similarity Index Measurement (SSIM) and the Video Quality Measurement (VQM).

Measuring QoE using a passive method is less intrusive. The idea is to conceive a model which maps a QoE relevant set of these parameters like mean opinion score (MOS), Percentage Good or Bad (GoB) to a quality value. The ITU E-Model "The E-Model, A Computational Model for Use in Transmission Planning" ITU-T G.107, 2005 and the pseudo subjective quality assessment (PSQA) methods fall in this category.

Recently, there are new proposals on measuring QoE using passive inference. A model to quantify VoIP user satisfaction, called User Satisfaction Index (USI) has also been proposed. The model is based on a rigorous analysis of call durations and source- and network-level QoS metrics. A similar study of online gamers K-T. Chen, P. Huang and C-L. Lei "How sensitive are online gamers to network Quality?" Communications of the ACM, vol. 49, no 11, pp. 34-38, Nov 2006 extracted latency and loss from TCP packet headers and modelled game-playing times. A follow-up proposes a framework called OneClick to capture users' perceptions when they are using network applications

Finally we note the approach in S. Khirman and P. Henriksen "Relationship between Quality-of-Service and Quality-of-Experience for public internet Service" In Proc. 3rd Passive Active Measurement Workshop, Fort Collins, 2002. It discusses detection of user actions like stop and reload as metrics of QoE, and relates the rate of such actions to QoS metrics such as latency and effective bandwidth. However, the analysis is performed on a per-flow basis, but in reality, the users tend to see complete web pages, media clips or other application relevant units rather than individual flows.

A major problem with *subjective* methodologies is that they cannot easily be automated but require a group of people for conducting the tests and this makes them expensive and time consuming. We summarize a number of other limitations of this approach below.

The reliability of the results can be questioned since human judgement may be impacted by various factors like momentary, personal biases and limitations of human memory. With respect to the former, ratings may, for instance, be related to how interesting the content is, the enumerations given for participating in a test *etc.* With respect to the latter, when a tester is asked to watch a 10-minute long video, there is no guarantee that the signal in the first 2 minutes and the signal on the last 2 minutes would have identical impacts on the subject. Moreover, given the nature of human memories, people are subject to the recent effect. In other words, the most recent experience dominates a user's ratings.

The metric used to quantify experiences is not completely scientific. In general the subjects are asked to give absolute ratings for each test. However, different people may have different interpretation of the absolute values. For instance, in MOS, there is a scale 1-5 of predefined scores mapping to the experiences of bad, poor, fair, good, and excellent experiences respectively. Different people may have different interpretations of these feelings hence the results may differ between people who have the same experience.

A large population of testers is required, as one subject cannot take the same test repeatedly too many times. Otherwise, the subject may become tired and insensitive so to give biased scores. Moreover, one typically needs to run many different tests with, e.g., different content in each test.

*Objective* evaluation methods are efficient as no user input is required. However, they are typically designed for specific applications, mostly audio and video and they have a strong dependence on subjective tests results for calibration or training and many approaches are based on the availability of an undisturbed reference signal. Moreover, they assume that individual quality features such as loudness, delay, echo, and distortion have mutually independent effects on the perceived quality and this typically not the case.

The limitations of existing passive inference approaches are that they are mainly focused on certain applications like Skype, VoIP and on-line gaming. Thus they cannot be directly applied to general applications.

### SUMMARY

Naively using the early termination as a sign for bad QoE is not accurate. It may result in many false positives as terminations may be caused by users lacking or losing interest in the content or closing the browser accidentally. For example when a user clicks backward a number of times in a row to get to an earlier page, the intermediate pages lack interest. Another example is when the user may have read enough to decide that this was not was he or she was looking for, or it may be that the content of interest has arrived and been consumed and the user may be uninterested in the remaining advertisements which still are being downloaded. Thus, one question is how to identify the set of terminations that reflects true user dissatisfaction.

In exemplary embodiments in the present disclosure a method for identifying web page transactions causing user dissatisfaction is presented. The method comprises determining at least one network characteristic for all transactions associated with a web page and said user, determining a network characteristics function dependent on said at least one network characteristic using the transactions not associated with cancellations and for each cancelled transaction determining a value indicative of if said cancelled transaction was a result of user dissatisfaction by comparing said at least one network characteristic for said cancelled transaction with a value derived from said network characteristics function.

In other exemplary embodiments an apparatus for identifying web page transactions causing user dissatisfaction comprising a processor, a memory, input and output are disclosed. The memory are comprising instructions executable by said processor, whereby said apparatus is operative to determine at least one network characteristic for all transactions associated with a web page and said user, determine a network characteristics function dependent on said at least one network characteristic using the transactions not associated with cancellations, and for each cancelled transaction determine a value indicative of if said cancelled transaction was a result of user dissatisfaction by comparing said at least one network characteristic for said cancelled transaction with a value derived from said network characteristics function

According to other embodiments disclosed herein a reset probability function based on said network characteristics function and a first threshold related to said first network characteristics based on said reset probability function is determined. Further web pages associated with transactions as web pages causing user dissatisfaction are identified in response to said first threshold.

According to yet other embodiments a probability that the cancelled transaction is causing user dissatisfaction is determined by dividing the value of the at least one network characteristic for the cancelled transaction with a corresponding value from said network characteristics function.

According to further embodiments said network characteristics is selected from a group of network characteristics comprising: time to first content, text completion time, valuable content completion time, effective throughput, number of received bytes at different times and response time, minimum throughput over all sites, maximum completion time over all flows.

According to other embodiments any of the network characteristics in said group of network characteristics are applied per flow or per site.

Other embodiments disclose determining the network characteristics function by determining the average number of received bytes per time for a large number of transaction not associated with cancellations, and for each cancelled transaction identifying said transaction as causing user dissatisfaction with a probability of 1-(total number of bytes for the cancelled transaction divided by the average number of bytes received for the time) if the total number of bytes received is below the average number of bytes for that time.

According to further embodiments said transactions are sorted into different bins depending on the value of said first network characteristics, and for each bin dividing the number of transaction associated with a cancellation with the total number of transactions.

According to other variants the values of said network characteristics for which the rate of change for said reset probability function change more than a second threshold is determined and the lowest of said values are selected as said first threshold.

According to other embodiments the values of said network characteristics for which said reset probability function is larger than a second threshold is determined and the lowest of said values is selected as said first threshold.

According to other embodiments disclosed herein a set of transactions is filtered to get a sub-set of transactions, and said steps of determining a first network characteristic, determining a reset probability function, determining a first threshold and identifying web pages is performed on said sub-set of transactions.

According to another embodiment said filtering comprises applying at least one filter for removing transactions not suitable for identifying web pages causing user dissatisfaction.

Other embodiments show that filtering is performed by applying at least one filter selected from a group of filters comprising: removing all transactions not associated with Web Browsing, remove all transactions associated with a user which has no cancelled transactions, remove all transactions associated with a user which has fewer than a predetermined number of normal transactions, remove all cancelled transactions where a network characteristic is above a threshold.

### BRIEF DESCRIPTION OF DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to affect such feature, structure, or characteristic in connection with other embodiments whether or not explicitly described.
Figure 1 is a flow diagram according to embodiments disclosed in the present description.
Figure 2 is a flow diagram according to embodiments disclosed herein.
Figure 3 is a further flow diagram according to further embodiments disclosed herein.
Figure 4 is a schematic diagram illustrating a reset probability function as disclosed herein.
Figure 5 is a schematic diagram illustrating a further reset probability function as disclosed herein.
Figure 6 is a schematic diagram illustrating a network characteristics function as disclosed herein.
Figure 7 is a further schematic flow diagram according to further embodiments disclosed herein.
Figure 8 is a schematic block diagram of an apparatus according to embodiments disclosed.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Unsatisfactorily long time from the request for a page to the presentation of that page on the screen could make impatient end-users push the STOP or RELOAD buttons in their web browsers thereby initiating user-end cancelations. Such cancelations would result in early closures of the HTTP sessions as well as the underlying TCP connections and may be interpreted as indicators of unsatisfactory QoE. These closures can be identified by analyzing the HTTP protocol transactions and the transport layer actions.

Our method to identify users' unsatisfactory experiences is to search for patterns from passively collected packet traces. The intuition is that when a user experiences bad performance, he or she will initiate the closure of the HTTP session instead of waiting for the normal HTTP downloading process to finish and the communication pattern observed in the network will thus be different from the one during normal downloading cases.

For the purpose of this disclosure the term transaction is defined as the entire process of a web browsing action. It may contain one or more flows from the same client to one or more servers; a web page is defined as the content sent from the servers to the client in one transaction. A cancellation means that the user stops the web browsing activity before all content of a web page has been delivered. A RESET means that the TCP RST packets are sent from the client to the server. Such resets is one exemplary way to detect cancellations, other examples include more detailed flow analyses such as comparing the flow lengths announced at the beginning of flows to the amount of data received when the flows are terminated or comparing actually downloaded volumes to volumes downloaded where all transactions are repeated but not cancelled. If having control on either the client, or server end, then the accuracy can be further improved.

Although user-initiated cancellations are likely indicators of user dissatisfaction, it is clear that cancellations also may be related to other reasons but performance such as navigation (e.g., repeated clicks on "backward" or "forward") or correction (e.g., to abort unintentional clicks).

One way to identify the reasons behind cancellations is to interview the end users. While this can be done for small groups of voluntary users it is noted that, besides the sheer complexity of such an approach, both the selection of users and the conditions of the measurement may result in unrepresentative results in that users who chose enroll may be more or less patient than other users and the fact that their opinion is observed may be make them more/less patient than otherwise. It would be better to avoid these problems by relying on passive monitoring only and thus enable continuous measurements on a large scale.

To this end embodiments in the present text disclose methods to heuristically classify cancellations as "performance related" indicating possible user dissatisfaction or "for other reasons".

Further, embodiments in the present text disclose methods to identify "acceptable performance" after which cancellations are said to be related to performance if their performance is worse than this threshold, but attributed to other reasons otherwise. Noting that tolerance may vary between different users and different content, the present disclosure determines "acceptance thresholds" per user, to account for different users, expressed as percentiles, to account for different content in a way which is less sensitive to outliers.

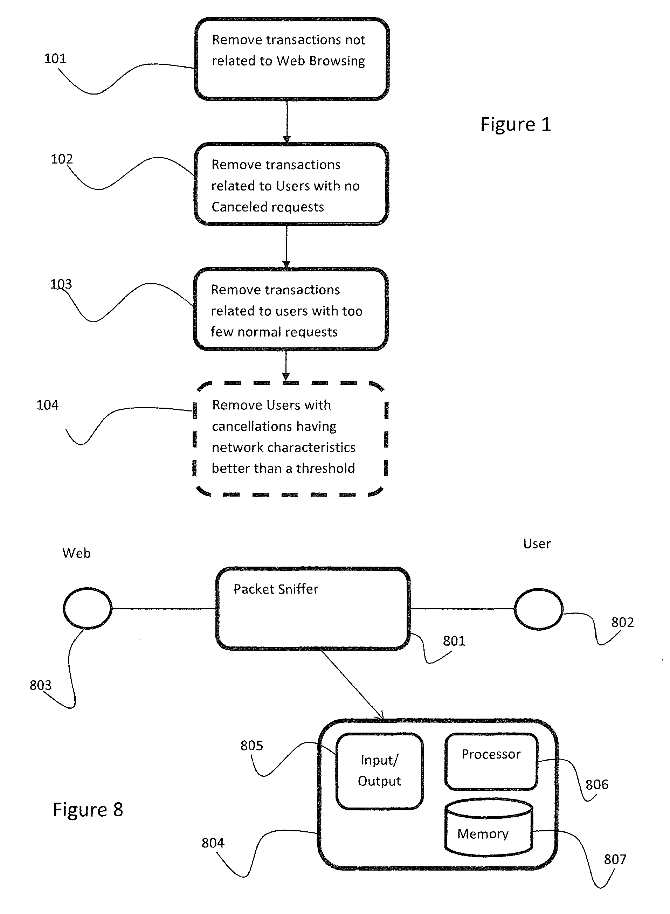

Figure 1 is a flow diagram of one embodiment for filtering a massive amount of data to identify a set of transactions which may be used to indicate user dissatisfaction.

According to the present disclosure to summarize the performance experienced by the user different network characteristics is used. Three exemplary network characteristics are discussed below.

Page download time: Page download time is defined as the time from when the user sends the HTTP request until all objects in the page have been downloaded. In reality, users may not care about all the objects in a page. For instance, a page may contain invisible images, advertisements, or user tracking services. Therefore, there may be a slight difference between the page download time and the user perceived waiting time. The page download time can be used as an approximation of the user perceived waiting time.

Effective throughput: Similarly, the throughput is defined as the average bytes per second during the download process, i.e., the total number of bytes of received content divided by the page download time. This metric is different from the pure network throughput, because the network throughput does not includes the server response delay. However, it captures the actual throughput that the user perceives.

First content arrival time: Finally, first content arrival time is defined as the duration between a user's first request for web content and the first data packet of the content. Note that the page may not be displayed to the user when web content is received partially, depending on the browser's implementation. However, it can be an indication that the user is receiving some content from the server. Intuitively, when the user receives a subset of the content, he or she may be more hopeful to receive the rest, and thus may be more patient and willing to wait for a longer period

It is, however, emphasized that the above are just examples of metrics to indicate QoE performance that one can use. Examples of other metrics include complete counts of received information *vs*. time expressed as bytes, percentage, page objects *etc*. and information rate *vs*. time expressed as bits per second, percentage per second, page objects per second *etc*. Above we mention the time to the first content as one specific example of a metric which goes beyond the traditional QoS metrics used in the art; other such examples include text completion time which is the delay until the text has arrived, "valuable content" completion time which is the delay until text and images less advertisements have been received etc. It should also be noted that even if classic metrics also used in QoS measurements are mentioned above, e.g. delay and throughput, as metrics available for embodiments disclosed herein, there is a difference between these metrics as used herein compared to when used for QoS. One such difference when used for QoE performance measure is that it refers to web pages which may comprise groups of flows as indicated above, and thus that the measure of the metrics are performed on groups of flows. Another example is that the QoE may be measure per site. If the measures are performed per site or per flow, different aggregation of the measures can be used for a consolidated QoE measure. For instance one can pick the maximum or minimum, one can take the average of all the flows or per site, one can take the median etc.

According to other embodiments it is also possible to use adaptive assessments of user-dependent acceptable QoE performance to cater for the possibility that users patience may depend on the context, *e.g*., looking up some facts at the office, reading a newspaper on the train or playing some music clips at home. Provided there is enough data to render reliable estimates one may use different thresholds for different kinds of content, different URLs, different times of the day, different agents, PCs and mobiles *etc,* different accesses, fixed and cellular *etc.* different locations, at home and on the move *etc.* and so on. It may also be that acceptable performance varies with time; users may get used to certain performance levels or users may come over the initial excitement of a new device.

According to further embodiments, provided the measurements are run over longer periods, one may want to adapt thresholds to the *current* expectations by using *e.g.,* sliding thresholds by applying exponential averaging or other filtering procedures.

Other examples of further refinements include filtering based on history. One may, *e.g.,* remove cancelled pages not only because of thresholds but also for supposedly causal reasons (inferred from the context). For example, cancellation of recently visited pages may be accidental or related to backward/forward navigation *etc.* and almost completed pages may be cancelled because users determine that the content is uninteresting. Therefore, the set of cancellations need to be examined all together and the true cancellations caused by performance issues determined as will be further disclosed below.

The embodiment disclosed in connection with figure 1 can be viewed as a filter for returning transactions associated with users and web pages which comprise at least one cancelled request possibly due to impaired performance as experienced by the user. The input to the method comprises four sets:
- *C,* the set of cancelled transactions,
- *N,* the set of normal transactions,
- *U,* the set of users involved in both transactions and
- *P,* the set of pre-defined agent fields to be studied, for example, Internet Explorer, Chrome, Firefox *etc*. which identify browsers. Also other tags which are indicative of relevant apps can be used. This pre-defined set helps eliminate other non-web browsing related traffic for which the analysis would not make sense.

With reference to figure 1, firstly remove all requests from *C* and *N* for which it cannot be verified that they are related to web browsing, step 101. One criterion that can be used is that the agent name should contain the word "Mozilla". This means that *e.g.,* Internet Explorer, Chrome and Firefox are captured, this is the set P. The new sets of transactions are *C*_{B} and *N*_{B}. We can further extend the set of agents to mobile device applications.

Build a list of all users *U*_{BC} with at least one cancelled request in *C*_{B}, step 102. The users may be identified by IP-addresses or IMSI numbers.

Build a list of all normal requests *N*_{BC} the users (IP addresses) of which are found in *U*_{BC}.

Remove all users in *U*_{BC} the IP address of which is not seen in at least *R*ₘᵢₙ normal requests, step 103. An exemplary value of *R*ₘᵢₙ is 20. The new set of users is put in *U*_{BCN}. Then remove all requests in *C*_{BC} and *N*_{BC} related to users no longer seen in *U*_{BCN}. This step generates a new set of users in *U*_{BCN} and two new sets of transactions *C*_{BCN} and *N*_{BCN}.

For all users *u*∈*U*_{BCN}, compute the *p*^{th} percentile of the response time, ρᵤ(*p*) and the π^{th} percentile of the throughput, λ*ᵤ*(π), over all normal requests for each user identifier*u*. The particular values of rho and lambda can be viewed as thresholds for the Quality of Experience characteristics for the particular user. That is, if a cancelled transaction has a better value than the threshold, i.e. the throughput is above lambda and/or the response time is below rho, the cancellation is regarded as not being made due to performance issues, else the cancellation is regarded as depending on that the user experienced performance issues and decided to cancel the web page request.

Remove all requests in C_{BCN} the response time of which is below ρ*ᵤ* or the throughput of which is above λ*ᵤ*. For example, if for user u ρ*ᵤ* is determined to be 2 seconds, all cancellations occurring within 2 seconds of the request are less likely to be caused by poor performance for that particular user u. Typically a 25^{th} percentile threshold for throughput may be in the range 1-100 kilobits per second, preferably 10-50 kilobits per second and a typical threshold for a 75^{th} percentile for delay may be in the order of 0.5-100 second, preferably 1-10 seconds. Obviously, these thresholds may vary substantially based on the particular application, user preference, network characteristics, available bandwidth, user connectivity, such as mobile or fixed just to mention a few.

Then create a subset of users *U'* consisting of all users in *U*_{BCN} by removing users the IP addresses of which no longer are seen in *C*_{BCN} and finally a subset N' of requests by removing all requests in *N*_{BCN} related to users not seen in *U*', step 104.

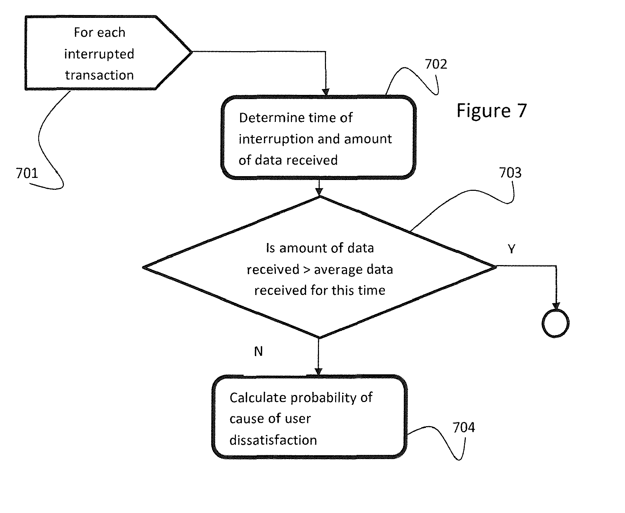

Step 104 is dotted in figure 1 to indicate that it is an optional step. Thus in one embodiment step 104 is not performed as the initial filtering, but rather all users are kept in the set independently of the indicated performance. Particularly in the embodiment disclosed below in connection with figure 7. However, also for other embodiments step 104 may be omitted. The purpose of step 104 is effectively to remove cancelled transactions which have sufficiently good network characteristics as valued by the particular user in question and also of course to remove the particular users associated with the transactions unless there are other cancelled transactions remaining for that particular user which have network characteristics below the threshold. The removed transactions may be suspected not to be safe indications of user dissatisfaction.

The result is a filtered set of cancelled transactions *C*', its corresponding normal set *N'* and the set of users *U*'.

It is emphasized that the algorithm above is just an example of how raw sets *C, N* and *U* can be transformed into filtered sets *C', N*' and *U*' and of how performance can be characterized to facilitate this procedure *i.e.,* the metrics response time and effective throughput can be supplemented or replaced by other metrics and the descriptor percentiles can be supplemented or replaced by other descriptors as has been discussed above.

From the above steps, a set of most likely true early cancellations can be obtained and their comparable normal pages. The normal transactions are needed because we can use them to identify under what circumstances a user loses his patience, and the underlying reasons behind it. Another reason is that different users have different tolerance levels of the bad performance. The tolerance level is also related to the normal performance seen by each user. For example, a user who usually has slow network connectivity will be more used to the slow download process. This is a very important step, as the operators can use the results from such analyses to take actions.

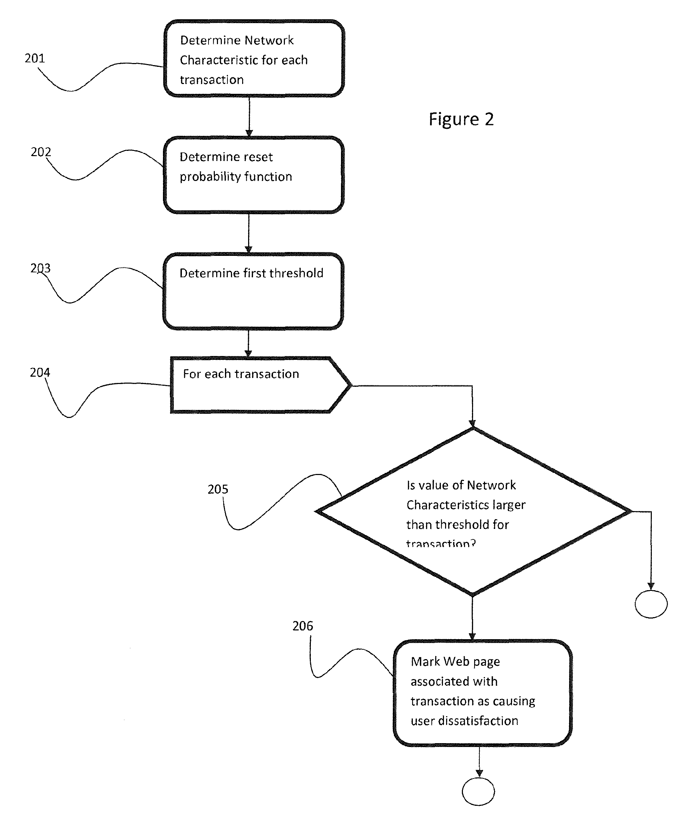

Figure 2 is a schematic flow diagram of an embodiment disclosing a method for determining the thresholds for dissatisfaction.

The users become unsatisfied when the waiting time for a download is too long. The method illustrated in figure 2 provides an exemplary way of determining web page requests causing user dissatisfaction. This can help operators better improve the bottleneck of their networks, or to suggest users buying a different class of services with higher quality.

The method uses the filtered set from the method illustrated in figure 1 as input. With reference to figure 2 in step 201 a network characteristics is determined for each transaction. This can for instance be the effective throughput or response time as discussed above. If so it would be prudent to save the calculations and/or fetching of values done above and step 201 would then entail acquiring the values from the store. In step 202 a reset probability function is determined as will be further detailed below. The reset probability function is dependent on the network characteristics, e.g. the effective throughput and returns a reset probability for each input network characteristic value.

A first threshold is determined in step 203. According to one embodiment the first derivative is calculated for the reset probability functions and a threshold is selected where the first derivative changes rapidly as will be further illustrated below. Now, for each transaction associated with a cancellation step 204 the network characteristics for that transaction is compared to the threshold step 205 and depending on the comparison the web page associated with the transaction is marked as causing user dissatisfaction step 206. E.g. if the network characteristics selected is effective throughput, then if the effective throughput for the cancelled transaction is smaller than the determined threshold the web page is marked as causing user dissatisfaction.

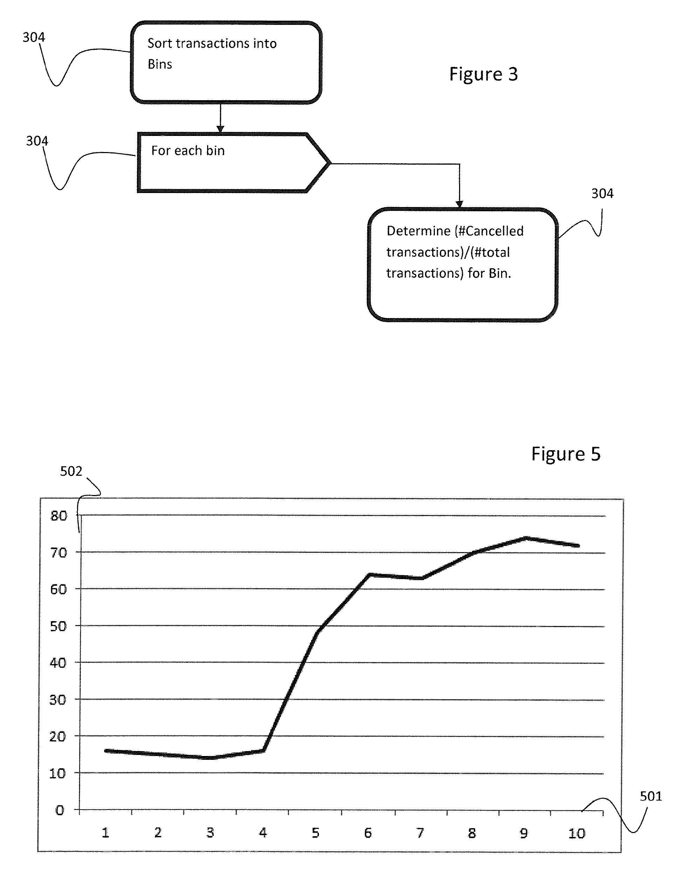

Figure 3 is a schematic flow diagram of creating the reset probability function from the selected network characteristics for the transactions in the set. In step 301 the transactions are sorted into bins depending on the value of the associated network characteristics and for each bin step 302 a reset probability is determined step 303 by dividing the number of cancelled transactions with the sum of the number of normal transactions and the number of cancelled transactions.

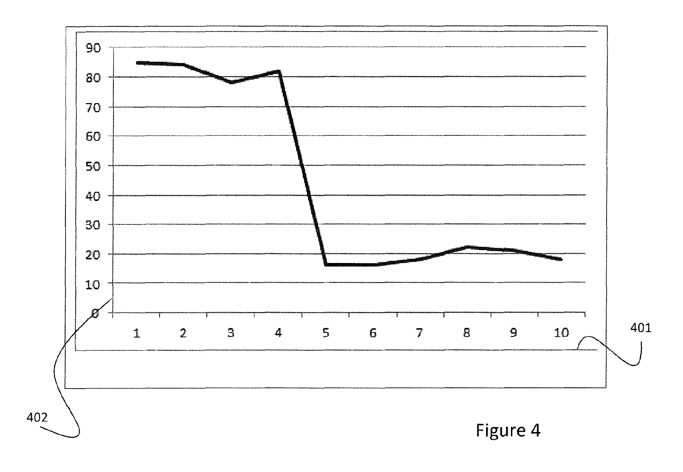

Figure 4 is a schematic exemplary representation of a reset probability function for the throughput. The throughput bins are marked on the x-axis 401 and the reset probability as a percentage is marked on the y-axis 402. As can be seen from the plot, the reset probability function has a steep grade between bins 4 and 5. The value for the throughput represented by bin 4 or 5 may thus be selected as the threshold as discussed above and cancelled transactions having a throughput lower than the value represented by bin 4 or 5 may thus be marked as causing user dissatisfaction.

Alternatively, the threshold may be selected as the first time throughput is below a certain value. This may result in a completely different threshold.

Figure 5 is another exemplary plot of a reset probability function this time based on the response time where each effective response time bin is marked on the x-axis 501 and the reset probability is marked on the y-axis 502. As can be seen the reset probability function has a steep grade over bins 4, 5 and 6. The effective response time represented by bin 5 may for instance be selected as the threshold as discussed above and web pages associated with cancelled transactions having response time higher than the selected threshold should be marked as causing user dissatisfaction.

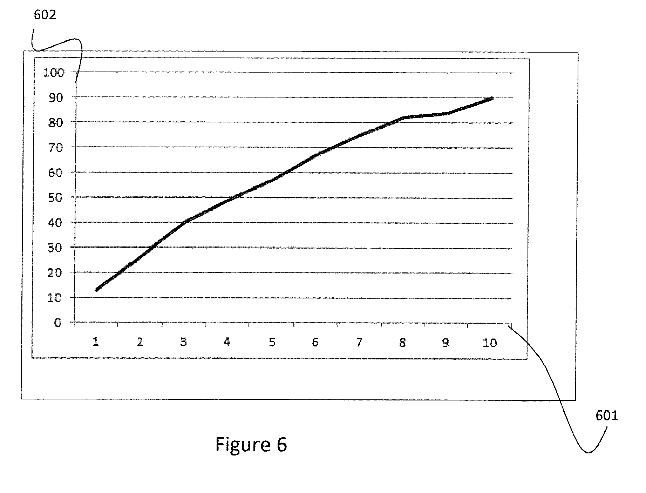

Figure 6 is a network characteristics function in which the average amount of data received has been plotted against time. The time is on the x-axis 601 and the amount of data received is on the y-axis 602. The plot is thus showing the function average amount of data per time or AoD(t).

Figure 7 is a schematic flow diagram of an exemplary embodiment wherein for each cancelled transaction, step 701 the time of interruption and the total amount of data received for the cancelled transaction is determined step 702 for instance by summing up the data received in the respective packets. If the amount of data for the cancelled transaction is smaller than the average amount of data for this time, step 703 a probability for cause of user dissatisfaction is calculated step 704 as 1-(amount of data received/AoD(t)). This means that pages which is much slower than the average will be assigned a higher probability to cause user dissatisfaction.

The "probability model" is unique in that decisions are not binary and can be generalized in many ways. For example one can compare not the average data but to the maximum data and include/exclude sessions which are later completed/cancelled etc. Again the values compared to can be "global", per user, per time, per application, per access etc. and in different combinations. One would expect to get more accurate results by comparing between other transactions the same user has done at the same time to the same site using the same device etc. but the drawback is that such strict selection criteria mean that a lot of data is needed before any analyses can be made.

Figure 8 is a schematic block diagram of an apparatus according to embodiments disclosed herein. Data transaction is collected by a packet sniffer 801 from web traffic between client (user) 802 and server (web host) 803. These are forwarded to an apparatus 804 adapted to perform the methods disclosed herein. The apparatus comprises input/output device 805 as well as a processor 806 and memory 807 for execution of code and storage of data as well as code. It should be remarked that the processor may be implemented using ASIC or FPGA or similar technology as well as being a from the shelf processor. The memory may comprise long term storage memory as well as RAM and or ROM memory.

It has thus been disclosed a method to identify the set of unsatisfied transactions from a large set of packet traces, using the pattern when users initiate early termination of web transactions and to make use of these user dissatisfaction transactions to generate meaningful cause analysis. This method can be used to reduce the false positives and to provide further insights on the reasons behind unsatisfactory performance.

The end result is a procedure/tool that enables operators to achieve a number of advantages. E.g. reduce churn by identifying users who may have reasons to be disappointed and possibly top up their monthly data bucket. Giving away the right to send a few more bytes to an existing customer typically tends to be a lot cheaper than recruiting a new customer.

It may also be used to improve performance by expanding the network when and where this is necessary *e.g.,* when abnormal cancellation rates are noted in certain parts of the network. Another application is to boost revenues by exploiting the information contained in actual user perception. For example, operators may sell statistical QoE information to sites which have an interest in attracting and retaining user interest such as e-commerce.

Further it is possible to apply real time control of traffic to minimize cancellations. For the same reasons as above, it may be of interest to sell such real time prioritization to content providers.

The real time control can also be used to differentiate subscriptions with respect to performance in a way that makes different classes noticeably different. It should be emphasized here that if performance is noticeably different, operators would find customers willing to pay a premium for this noticeable difference. Thus it is important that the user really is able to notice the difference and thus it is very important to be able to measure actual user experience.

Moreover, this can be done in a simple and automated way which enables adopting these ideas on a large scale to cover most or all users/areas/providers and continuously over time to keep up with changing requirements and expectations.

It will be appreciated that the foregoing description and the accompanying drawings represent non-limiting examples of the methods and apparatus taught herein. As such, the inventive apparatus and techniques taught herein are not limited by the foregoing description and accompanying drawings. Instead, the present invention is limited only by the following claims and their legal equivalents.

## Claims

1. A method for identifying web page transactions causing user dissatisfaction, the method comprising the steps of:
- determining (201) at least one network characteristic for all transactions associated with a web page and said user,
- determining (202) a network characteristics function dependent on said at least one network characteristic using the transactions not associated with cancellations,
- for each cancelled transaction determining (205) a value indicative of if said cancelled transaction was a result of user dissatisfaction by comparing said at least one network characteristic for said cancelled transaction with a value derived from said network characteristics function.

2. The method according to claim 1, comprising the further steps of:
- determining a reset probability function (202) based on said network characteristics function,
- determining a first threshold (203) related to said first network characteristics based on said reset probability function and,
- identifying web pages (206) associated with transactions as web pages causing user dissatisfaction in response to said first threshold.

3. The method according to claim 1, comprising the further steps of:
- determining a probability that the cancelled transaction is causing user dissatisfaction by dividing the value of the at least one network characteristic for the cancelled transaction with a corresponding value from said network characteristics function.

4. The method according to claim 1, wherein said network characteristics is selected from a group of network characteristics comprising: time to first content, text completion time, valuable content completion time, effective throughput, number of received bytes at different times and response time, minimum throughput over all sites, and maximum completion time over all flows.

5. The method according to claim 4, wherein any of the network characteristics in said group of network characteristics is applied per flow or per site.

6. The method according to claim 3, comprising the further steps of
- determining the network characteristics function by determining the average number of received bytes per time for a large number of transaction not associated with cancellations, and
- for each cancelled transaction identifying said transaction as causing user dissatisfaction with a probability of 1-(total number of bytes for the cancelled transaction divided by the average number of bytes received for the time) if the total number of bytes received is below the average number of bytes for that time.

7. The method according to claim 2, wherein the step of determining said reset probability function comprises,
- sorting (304) said transactions into different bins depending on the value of said first network characteristics, and
- for each bin dividing (304) the number of transaction associated with a cancellation with the total number of transactions.

8. The method according to claim 2, wherein said step of determining a first threshold (203) comprises,
- determine the values of said network characteristics for which the rate of change for said reset probability function change more than a second threshold,
- select the lowest of said values as said first threshold.

9. The method according to claim 2, wherein said step of determining a first threshold (203) comprises,
- determine the values of said network characteristics for which said reset probability function is larger than a second threshold,
- select the lowest of said values as said first threshold.

10. The method according to claim 1, comprising the further step of
- filtering (101; 102;103;104) a set of transactions to get a sub-set of transactions, and
- performing said steps of determining a first network characteristic, determining a reset probability function, determining a first threshold and identifying web pages on said sub-set of transactions.

11. The method according to claim 10, wherein said filtering comprises applying at least one filter for removing transactions not suitable for identifying web pages causing user dissatisfaction.

12. The method according to claim 10, wherein said filtering is performed by applying at least one filter selected from a group of filters comprising: removing all transactions not associated with Web Browsing, remove all transactions associated with a user which has no cancelled transactions, remove all transactions associated with a user which has fewer than a predetermined number of normal transactions, remove all cancelled transactions where a network characteristic is above a threshold.

13. An apparatus for identifying web page transactions causing user dissatisfaction comprising a processor (806), a memory (807), input and output (805), said memory comprising instructions executable by said processor, whereby said apparatus is operative to:
- determine at least one network characteristic for all transactions associated with a web page and said user,
- determine a network characteristics function dependent on said at least one network characteristic using the transactions not associated with cancellations, and
- for each cancelled transaction determine a value indicative of if said cancelled transaction was a result of user dissatisfaction by comparing said at least one network characteristic for said cancelled transaction with a value derived from said network characteristics function.

14. The apparatus according to claim 13, said memory comprising further instructions executable by said processor, whereby said apparatus is operative to:
- determining a reset probability function based on said network characteristics function,
- determining a first threshold related to said first network characteristics based on said reset probability function and,
- identifying web pages associated with transactions as web pages causing user dissatisfaction in response to said first threshold.

15. The apparatus according to claim 13, said memory (807) comprising further instructions executable by said processor, whereby said apparatus is operative to:
- determining a probability that the cancelled transaction is causing user dissatisfaction by dividing the value of the at least one network characteristic for the cancelled transaction with a corresponding value from said network characteristics function.

16. The apparatus according to claim 13, wherein said network characteristics is selected from a group of network characteristics comprising: time to first content, text completion time, valuable content completion time, effective throughput, number of received bytes at different times and response time, , minimum throughput over all sites, maximum completion time over all flows .

17. The apparatus according to claim 16, wherein any of the network characteristics in said group of network characteristics is applied per flow or per site.

18. The apparatus according to claim 15, said memory (807) comprising further instructions executable by said processor (806), whereby said apparatus is operative to
- determining the network characteristics function by determining the average number of received bytes per time for a large number of transaction not associated with cancellations, and
- for each cancelled transaction identifying said transaction as causing user dissatisfaction with a probability of 1-(total number of bytes for the cancelled transaction divided by the average number of bytes received for the time) if the total number of bytes received is below the average number of bytes for that time.

19. The apparatus according to claim 14, said memory (807) comprising further instructions executable by said processor (806), whereby said apparatus is operative to,
- sorting said transactions into different bins depending on the value of said first network characteristics, and
- for each bin dividing the number of transaction associated with a cancellation with the total number of transactions.

20. The apparatus according to claim 14, said memory (807) comprising further instructions executable by said processor (806), whereby said apparatus is operative to,
- determine the values of said network characteristics for which the rate of change for said reset probability function change more than a second threshold,
- select the lowest of said values as said first threshold.

21. The apparatus according to claim 14, said memory (807) comprising further instructions executable by said processor (806), whereby said apparatus is operative to,
- determine the values of said network characteristics for which said reset probability function is larger than a second threshold,
- select the lowest of said values as said first threshold.

22. The apparatus according to claim 13, said memory (807) comprising further instructions executable by said processor (806), whereby said apparatus is operative to
- filtering a set of transactions to get a sub-set of transactions, and
- performing said steps of determining a first network characteristic, determining a reset probability function, determining a first threshold and identifying web pages on said sub-set of transactions.

23. The apparatus according to claim 22, wherein said filtering comprises applying at least one filter for removing transactions not suitable for identifying web pages causing user dissatisfaction.

24. The apparatus according to claim 22, wherein said filtering is performed by applying at least one filter selected from a group of filters comprising: removing all transactions not associated with Web Browsing, remove all transactions associated with a user which has no cancelled transactions, remove all transactions associated with a user which has fewer than a predetermined number of normal transactions, remove all cancelled transactions where a network characteristic is above a threshold.
